(19) Europäisches Patentamt
European Patent Office
Office européen des brevets

(11) **EP 4 045 397 B1**

(12) **FASCICULE DE BREVET EUROPEEN**

(45) Date de publication et mention de la délivrance du brevet:
**31.07.2024 Bulletin 2024/31**

(21) Numéro de dépôt: **20799779.2**

(22) Date de dépôt: **15.10.2020**

(51) Classification Internationale des Brevets (IPC):
**B64C 7/02** *(2006.01)*  **F02C 7/042** *(2006.01)*
**B64D 15/02** *(2006.01)*  **B64D 29/00** *(2006.01)*
**B64D 33/02** *(2006.01)*  **F02C 7/04** *(2006.01)*

(52) Classification Coopérative des Brevets (CPC):
**F02C 7/04; B64D 33/02; F02C 7/042;**
B64D 2033/0233; B64D 2033/0286

(86) Numéro de dépôt international:
**PCT/FR2020/051841**

(87) Numéro de publication internationale:
**WO 2021/074535 (22.04.2021 Gazette 2021/16)**

(54) **ENSEMBLE POUR TURBOMACHINE**

ANORDNUNG FÜR EINE TURBOMASCHINE

ASSEMBLY FOR TURBOMACHINE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **15.10.2019 FR 1911490**

(43) Date de publication de la demande:
**24.08.2022 Bulletin 2022/34**

(73) Titulaires:
• **Institut Supérieur de L'aéronautique
Et de L'espace
31400 Toulouse (FR)**
• **SAFRAN AIRCRAFT ENGINES
75015 Paris (FR)**

(72) Inventeurs:
• **TANTOT, Nicolas, Jérôme, Jean
77550 MOISSY-CRAMAYEL (FR)**

• **CARBONNEAU, Xavier
31300 TOULOUSE (FR)**
• **CHANEZ, Philippe Gérard
77550 MOISSY-CRAMAYEL (FR)**
• **GARCIA ROSA, Nicolas
31400 TOULOUSE (FR)**
• **MARTIN PLEGUEZUELO, Alejandro
45600 TALAVERA DE LA REINA, TOLEDO (ES)**
• **SIRVIN, Nicolas, Joseph
77550 MOISSY-CRAMAYEL (FR)**

(74) Mandataire: **Regimbeau
20, rue de Chazelles
75847 Paris Cedex 17 (FR)**

(56) Documents cités:
**DE-B2- 2 318 380**    **GB-A- 1 410 160**
**US-A1- 2014 127 001**    **US-A1- 2018 371 996**

# Description

## DOMAINE DE L'INVENTION

L'invention concerne une nacelle de turbomachine.

L'invention vise plus spécifiquement une nacelle de turbomachine comprenant un dispositif de modification d'une géométrie d'entrée d'air.

## ETAT DE LA TECHNIQUE

On connaît des turbomachines présentant un taux de dilution élevé en vue d'améliorer leur rendement propulsif. Ces turbomachines sont toutefois de volume et de masse très importants, ce qui pénalise la performance énergétique de l'aéronef qu'elles propulsent, et induit des contraintes d'installation géométrique accrues.

Pour pallier cet inconvénient, il est connu de raccourcir la nacelle de la turbomachine. Néanmoins, l'entrée d'air est alors privée de sa capacité à limiter la génération et/ou la transmission de distorsions dans le flux d'air admis par la turbomachine. De telles distorsions sont préjudiciables pour la stabilité et les performances de la turbomachine, notamment de sa soufflante.

Une manière connue de résoudre ce problème consiste à munir la nacelle d'un dispositif de modification de la géométrie d'entrée d'air. Un tel dispositif comprend généralement une partie qui est mobile entre une position escamotée, où l'entrée d'air présente une géométrie nominale, et une position déployée, où la géométrie de l'entrée d'air est modifiée. De cette manière, lors de faibles vitesses d'avancement de l'aéronef, le déplacement du point d'arrêt au sein du flux d'air peut être réduit, grâce à l'ouverture d'une section additionnelle d'alimentation en flux d'air admis. En outre, le phénomène usuel de contournement de la lèvre d'entrée d'air par l'écoulement est minimisé. Ce phénomène a en effet typiquement lieu à faibles vitesses d'avancement, lorsque la partie radialement externe de l'écoulement est dévié vers l'extérieur de la nacelle par la forme bombée de la lèvre d'entrée d'air. Ceci entraîne une perte de débit d'air admis qui peut être préjudiciable aux performances de la turbomachine.

Néanmoins les dispositifs de modification de la géométrie d'entrée d'air connus de l'art antérieur présentent de nombreux inconvénients. Par exemple, le déploiement induit des phénomènes aérodynamiques indésirables, c'est-à-dire des perturbations de l'écoulement, tels que des décollements de couche limite au sein de l'écoulement, qui entraînent de fortes pertes de charge au sein du flux d'air admis. En outre, en position escamotée, la partie mobile présente de nombreuses discontinuités qui augmentent la traînée au sein de l'écoulement. Par ailleurs, les mécanismes nécessaires au passage de la position escamotée à la position déployée sont généralement complexes et encombrants, ce qui limite leur intégration au sein d'une nacelle de turbomachine. Enfin, de tels dispositifs ne présentent pas de systèmes redondants en cas de défaillance des mécanismes de déploiement.

Il existe donc un besoin de pallier au moins un des inconvénients de l'art antérieur précédemment décrits.

GB1410160 A divulgue une nacelle de moteur d'avion comprenant des parties externes et internes qui définissent une prise d'air annulaire, l'extrémité avant de la partie externe étant sous la forme d'un élément à lèvre axialement mobile qui, en fonctionnement normal, est en contact avec la partie principale de la partie externe mais qui, lorsqu'il est déplacé vers une position axialement avancée, est en contact avec la partie interne et définit avec la partie principale de la partie externe une prise d'air annulaire.

US2018371996 A1 divulgue un système de contrôle du flux sur une nacelle de moteur d'avion qui incorpore une pluralité d'aubes de translation ayant chacune un corps. Une pluralité égale d'actionneurs est couplée à un bord de fuite du corps d'une aube mobile associée. L'actionneur fait passer le corps d'une position rétractée à une position déployée.

## DESCRIPTION DE L'INVENTION

Un des buts de l'invention est réduire la transmission et/ou la génération de distorsions au sein du flux d'admission d'une turbomachine, notamment d'une turbomachine comprenant une nacelle de dimension axiale et d'épaisseur réduite.

Un autre but de l'invention est d'améliorer les propriétés aérodynamiques d'une nacelle de turbomachine, quelles que soient les conditions d'écoulement d'air.

Un autre but de l'invention est de proposer une nacelle dont l'entrée d'air est à géométrie variable.

Un autre but de l'invention est de renforcer la robustesse du comportement aérodynamique d'une nacelle dans l'ensemble de son domaine d'opération.

Un autre but de l'invention est de limiter les phénomènes aérodynamiques indésirables lors du déploiement d'un dispositif de modification d'une géométrie d'entrée d'air, tant à l'intérieur qu'à l'extérieur de la nacelle.

A cet égard, l'invention a pour objet un ensemble pour turbomachine conforme à la revendication 1.

Dans un tel ensemble, la surface de captation d'air peut être agrandie à faible vitesse d'avancement de l'aéronef sur lequel est monté la nacelle (i.e. vitesse absolue de l'aéronef par rapport au sol), grâce au canal d'écoulement d'air de la deuxième configuration. En outre, la longueur de l'entrée d'air peut être allongée à faible vitesse d'avancement, toujours grâce à la deuxième configuration, ce qui limite la transmission et/ou la génération de distorsions au sein du flux d'admission. Par ailleurs, la longueur de l'entrée d'air demeure courte à forte vitesse d'avancement, grâce à la première configuration, ce qui limite les pertes aérodynamiques de la turbomachine. De plus, le passage de la première configuration à la deuxième configuration garantit un comportement aérodynamique stable de l'écoulement. Enfin, il est possible de concevoir une géométrie du canal d'écoulement d'air en modifiant localement (i.e. selon une direction circonférentielle autour de l'axe longitudinal) la surface aval du premier bec, et/ou la surface amont du deuxième bec, de sorte à optimiser le comportement de l'écoulement d'entrée, quelles que soient les conditions de fonctionnement de la turbomachine.

Avantageusement, mais facultativement, l'ensemble selon l'invention peut en outre comprendre au moins l'une des caractéristiques suivantes, prises seules ou en combinaison :

- le deuxième bec présente, dans un plan radial par rapport à l'axe longitudinal, un profil amont de deuxième bec, le profil amont de deuxième bec présentant, dans la deuxième configuration, une continuité tangentielle avec un profil de la nacelle défini dans le plan radial,
- le premier bec présente, dans un plan radial par rapport à l'axe longitudinal, un profil amont de premier bec, et le deuxième bec présente, dans le plan radial, un profil amont de deuxième bec, le profil amont de deuxième bec étant identique au profil amont de premier bec,
- le deuxième bec présente :

  ∘ dans un premier plan radial par rapport à l'axe longitudinal, un premier profil amont de deuxième bec, et
  ∘ dans un deuxième plan radial par rapport à l'axe longitudinal, un deuxième profil amont de deuxième bec,

  le deuxième profil amont de deuxième bec étant différent du premier profil amont de deuxième bec, de sorte à ce que le canal d'écoulement d'air présente, dans le premier plan radial, une première section longitudinale, et dans le deuxième plan radial, une deuxième section longitudinale, la deuxième section longitudinale étant différente de la première section longitudinale,
- sur au moins une portion angulaire du dispositif de modification d'une géométrie de l'entrée d'air, le premier bec et le deuxième bec sont reliés de sorte à former un bec unique, également mobile en translation selon l'axe longitudinal par rapport à la nacelle,
- le premier bec et le deuxième bec s'étendent sur une première portion angulaire de la nacelle, une deuxième portion angulaire de la nacelle étant bordée par une partie fixe de la lèvre d'entrée d'air,
- le dispositif de modification d'une géométrie de l'entrée d'air comprend une tige de guidage s'étendant parallèlement à l'axe longitudinal, et reliant le premier bec au deuxième bec de manière à ce que, sur au moins une portion angulaire du dispositif de modification d'une géométrie de l'entrée d'air, le premier bec soit monté fixe par rapport au deuxième bec,
- le dispositif de modification d'une géométrie de l'entrée d'air comprend une tige de guidage s'étendant parallèlement à l'axe longitudinal, la tige de guidage étant télescopique de sorte à ce que, sur au moins une portion angulaire du dispositif de modification d'une géométrie de l'entrée d'air, le mouvement du premier bec soit indépendant du mouvement du deuxième bec,
- il comprend un système de dégivrage du premier bec et/ou du deuxième bec, comprenant un canal de circulation de fluide de dégivrage s'étendant au moins en partie à l'intérieur de la tige de guidage,
- le dispositif de modification d'une géométrie de l'entrée d'air comprend en outre un actionneur logé dans la nacelle, et configuré pour mettre en mouvement le premier bec et le deuxième bec entre la première configuration et la deuxième configuration,
- la nacelle présente une forme non-axisymétrique.

L'invention a également pour objet une turbomachine comprenant une nacelle telle que celle précédemment décrite.

DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :

La figure 1 est une vue en coupe d'une nacelle de turbomachine,
La figure 2 est une vue en perspective d'un premier exemple de réalisation d'un ensemble pour turbomachine selon l'invention dans une première configuration,
La figure 3 est une vue en perspective du premier exemple de réalisation d'un ensemble pour turbomachine illustré en figure 1 dans une deuxième configuration,
La figure 4 est une vue en coupe d'une partie d'un deuxième exemple de réalisation d'un ensemble pour turbomachine selon l'invention dans une première configuration,
La figure 5 est une vue en coupe d'une partie d'un troisième exemple de réalisation d'un ensemble pour turbomachine selon l'invention dans une première configuration
La figure 6 est une vue en coupe d'une partie du deuxième exemple de réalisation d'un ensemble pour turbomachine illustré en figure 4, dans une deuxième configuration,
La figure 7 est une vue en coupe d'une partie d'un quatrième exemple de réalisation d'un ensemble pour turbomachine selon l'invention dans une première configuration,

La figure 8 est une vue en coupe d'une partie du quatrième exemple de réalisation d'un ensemble pour turbomachine illustré en figure 7 dans une deuxième configuration,

La figure 9 est une vue de face d'un cinquième exemple de réalisation d'un ensemble pour turbomachine selon l'invention,

La figure 10 est une vue en coupe d'une partie d'un sixième exemple de réalisation d'un ensemble pour turbomachine selon l'invention dans une deuxième configuration,

La figure 11 est une vue en coupe d'une partie d'un septième exemple de réalisation d'un ensemble pour turbomachine selon l'invention dans une première configuration,

La figure 12 est une vue en coupe d'une partie du septième exemple de réalisation d'un ensemble pour turbomachine illustré en figure 11 dans une deuxième configuration,

La figure 13 est une vue en perspective de côté d'un huitième exemple de réalisation d'un ensemble pour turbomachine selon l'invention,

La figure 14 est une vue en coupe d'un neuvième exemple de réalisation d'un ensemble pour turbomachine selon l'invention,

La figure 15 est une vue de face du neuvième exemple de réalisation d'un ensemble pour turbomachine selon l'invention illustré en figure 14,

La figure 16 est une vue en coupe d'un dixième exemple de réalisation d'un ensemble pour turbomachine selon l'invention, et

La figure 17 est une vue de face du dixième exemple de réalisation d'un ensemble pour turbomachine selon l'invention illustré en figure 14.

## DESCRIPTION DETAILLEE DE L'INVENTION

### Nacelle de turbomachine

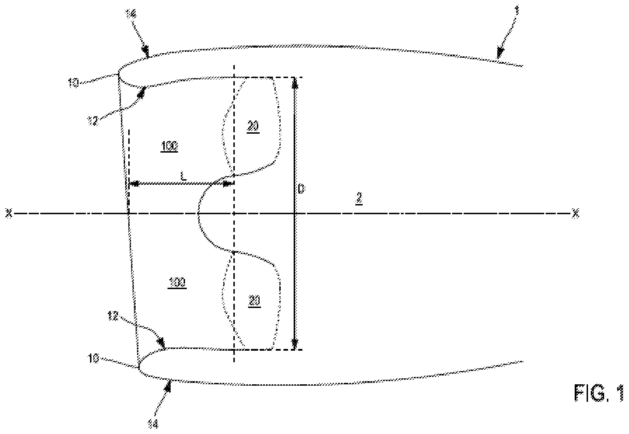

En référence aux figures 1 à 3, une nacelle 1 de turbomachine présente un axe longitudinal X-X autour duquel elle s'étend, par exemple avec une forme de révolution autour de l'axe longitudinal X-X, typiquement une forme substantiellement cylindrique de révolution. Ceci n'est toutefois pas limitatif, puisque la nacelle 1 peut également s'étendre autour de l'axe longitudinal X-X avec une forme non-axisymétrique, c'est-à-dire une forme telle que l'axe longitudinal X-X n'est pas orthogonal au plan passant par l'ensemble des points formant l'extrémité amont de la nacelle 1.

La nacelle 1 comprend en outre une lèvre d'entrée 10 définissant une entrée d'air 100 par laquelle de l'air peut être admis au sein de la turbomachine. La lèvre d'entrée 10 permet de joindre, à une extrémité amont de la nacelle 1, une paroi interne 12 de la nacelle 1, en contact avec le flux d'air admis au sein de la turbomachine, avec une paroi externe 14 de la nacelle 1, en contact avec l'air circulant autour de la turbomachine.

Dans tout ce qui va suivre, on définit l'amont et l'aval par rapport au sens d'écoulement d'air au sein de la turbomachine. En outre, on définit par « axial » une direction sensiblement parallèle à l'axe longitudinal X-X, et par « radial » une direction sensiblement orthogonal audit axe longitudinal X-X.

La nacelle 1 entoure généralement un corps moteur 2 de la turbomachine, à l'amont duquel une soufflante 20 s'étend. En fonctionnement, la soufflante 20 aspire le flux d'air admis par l'entrée d'air 100, et le propulse à l'intérieur du corps moteur 2. Comme visible sur la figure 1, la soufflante 20 présente un diamètre D, et l'entrée d'air 100 présente une longueur L définie comme la distance séparant une extrémité amont de la lèvre d'entrée 10 d'une extrémité amont de la soufflante 20. Plus précisément, comme illustré sur la figure 1, la longueur L correspond à la distance entre un bord d'attaque d'un pied d'une aube de la soufflante 20 et l'intersection entre l'axe longitudinal X-X avec le plan de captation d'air, c'est-à-dire le plan passant par les extrémités de la lèvre d'entrée 10 ; cette distance étant prise le long de l'axe longitudinal X-X. En d'autres termes, la longueur L correspond à la distance entre un bord d'attaque d'un pied d'une aube de la soufflante 20 et un plan orthogonal au bord d'attaque de la lèvre d'entrée 10 pris au niveau d'un plan médian de la nacelle 1 qui contient l'axe longitudinal X-X et qui est orthogonal à un plan de symétrie de la nacelle 1, i.e. un plan qui passe par les azimuts 90° et 270° de l'entrée d'air 100. Dans un mode de réalisation privilégié, la nacelle 1 présente des dimensions telles qu'un rapport de la longueur d'entrée d'air L sur le diamètre de la soufflante D est compris entre 0,15 et 0,25, et vaut de préférence 0,19. Dans un tel mode de réalisation, les propriétés aérodynamiques de la turbomachine sont optimisées avec, notamment, une traînée minimisée par rapport au maître-couple du corps moteur 2, c'est-à-dire par rapport aux dimensions du corps moteur 2.

### Dispositif de modification d'une géométrie de l'entrée d'air

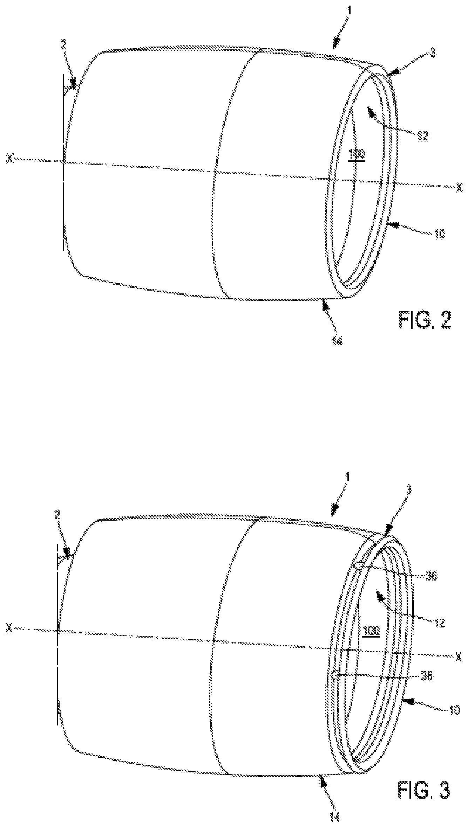

Un dispositif de modification d'une géométrie de l'entrée d'air 3 grâce auquel la nacelle 1 peut présenter au moins deux configurations illustrées notamment en figures 2 à 8, 10 à 14, et 16.

Dans une première configuration, illustrée en figures 2, 4, 5, 7 et 11, la géométrie de l'entrée d'air 100 est particulièrement adaptée à des conditions de vol de croisière, à vitesse élevée d'avancement de l'aéronef auquel la nacelle 1 est fixée, induisant une vitesse élevée d'écoulement d'air à l'infini amont de la nacelle 1. Cette géométrie de première configuration autorise en effet un écoulement très homogène au niveau de l'entrée d'air 100. Dans cette première configuration, le dispositif de modification d'une géométrie de l'entrée d'air 3 est dans une position escamotée, ou de repli.

Dans une deuxième configuration, illustrée en figures 3, 8, 10, 12 à 14, et 16, la géométrie de l'entrée d'air 100 est particulièrement adaptée à des conditions de vol au décollage, à l'atterrissage et/ou au niveau du sol, à vitesse plus faible d'écoulement d'air. Cette géométrie de seconde configuration permet d'offrir une surface d'aspiration d'air plus large, et de déplacer le point d'arrêt du flux entrant en aval de l'entrée d'air 100 de sorte à réduire le contournement de la lèvre d'entrée 10 par l'écoulement. En outre, elle permet de minimiser les distorsions dans l'écoulement du flux d'air au niveau de l'entrée d'air, notamment dans des conditions de vent de travers, ou de fortes incidences. Dans cette deuxième configuration, le dispositif de modification d'une géométrie de l'entrée d'air 3 est dans une position déployée.

En tout état de cause, le dispositif de modification d'une géométrie de l'entrée d'air 3 permet d'améliorer la capacité de la nacelle 1 à réduire la distorsion du flux d'air admis au niveau de l'entrée d'air 100, ce qui permet notamment d'améliorer le comportement aérodynamique de la soufflante 20.

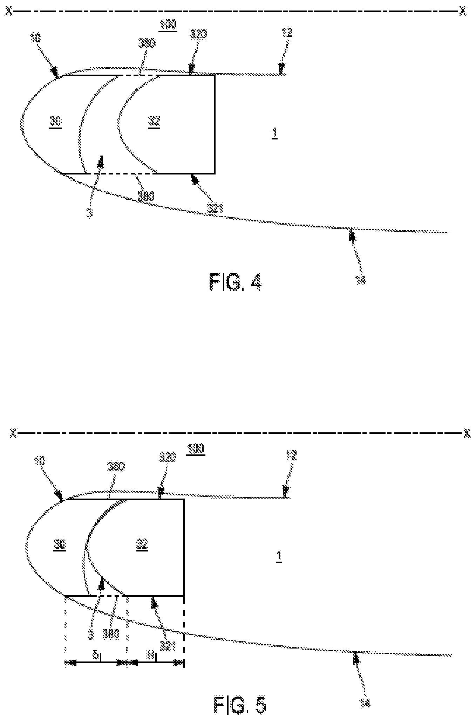

Comme visible plus précisément sur les figures 4 à 8, 10 à 14 et 16, le dispositif de modification d'une géométrie de l'entrée d'air 3 comprend un premier bec 30 et un deuxième bec 32. Comme visible sur ces figures, le premier bec 30 et le deuxième bec 32 sont mobiles en translation par rapport à la nacelle 1, selon l'axe longitudinal X-X, entre :

- une première configuration, illustrée en figures 2, 4, 5, 7 et 11, où :

    ∘ le premier bec 30 forme la lèvre d'entrée 10, et
    ∘ le deuxième bec 32 s'étend à l'intérieur de la nacelle 1, et

- une deuxième configuration, illustrée en figures 3,8, 10, 12 à 14, et 16, où :

    ∘ le premier bec 30 s'étend à distance de la lèvre d'entrée 10, et
    ∘ le deuxième bec 32 forme la lèvre d'entrée 10,

Dans la première configuration, le deuxième bec 32 demeure à l'intérieur de la nacelle 1, sans interaction avec l'écoulement d'air circulant autour de la lèvre d'entrée 10, c'est-à-dire de manière confinée.

Dans la deuxième configuration, le premier bec 30 et le deuxième bec 32 définissent un canal d'écoulement d'air 34 entre une surface aval du premier bec 30 et une surface amont du deuxième bec 32.

Ainsi, dans la première configuration, l'entrée d'air 100 présente une géométrie nominale, c'est-à-dire particulièrement adaptée à des conditions de vol de croisière, à vitesse élevée d'écoulement d'air, et, dans la deuxième configuration, la géométrie de l'entrée d'air 100 est modifiée de sorte à être particulièrement adaptée à des conditions de vol au décollage et/ou au niveau du sol, à vitesse plus faible d'écoulement d'air. La première configuration et la deuxième configuration du premier bec 30 et du deuxième bec 32 correspondent, respectivement, à la position escamotée et à la position déployée du dispositif de modification d'une géométrie de l'entrée d'air 3.

En référence aux figures 3, 7 à 9, 13, 15 et 17, le dispositif de modification d'une géométrie de l'entrée d'air 3 peut en outre comprendre une tige de guidage 36 reliant le premier bec 30 au deuxième bec 32, de manière à ce que, sur au moins une portion angulaire du dispositif de modification d'une géométrie de l'entrée d'air 3, le premier bec 30 soit monté fixe par rapport au deuxième bec 32. Ceci n'est cependant pas limitatif, puisque le premier bec 30 et le deuxième bec 32 peuvent ne pas être montés fixes l'un par rapport à l'autre, sur une autre portion angulaire du dispositif de modification d'une géométrie de l'entrée d'air 3 où, par exemple le premier bec et le deuxième bec sont reliés par une tige de guidage 36 télescopique, de sorte à ce que le mouvement du premier bec 30 soit indépendant du mouvement du deuxième bec 32. De cette manière, il est possible d'adapter la largeur du canal d'écoulement d'air 34 en fonction des conditions de vol, tout en maintenant la continuité de la jonction entre le deuxième bec 32 et la paroi interne 12

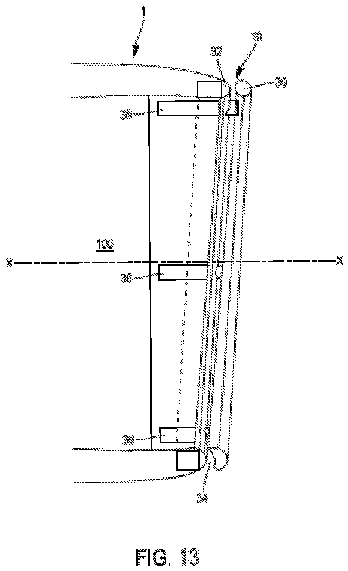

Avantageusement, comme visible sur la figure 13, la tige de guidage 36 s'étend parallèlement à l'axe longitudinal X-X, de sorte à faciliter les mouvements de déploiement et de rangement des becs 30, 32 au sein de la nacelle 1.

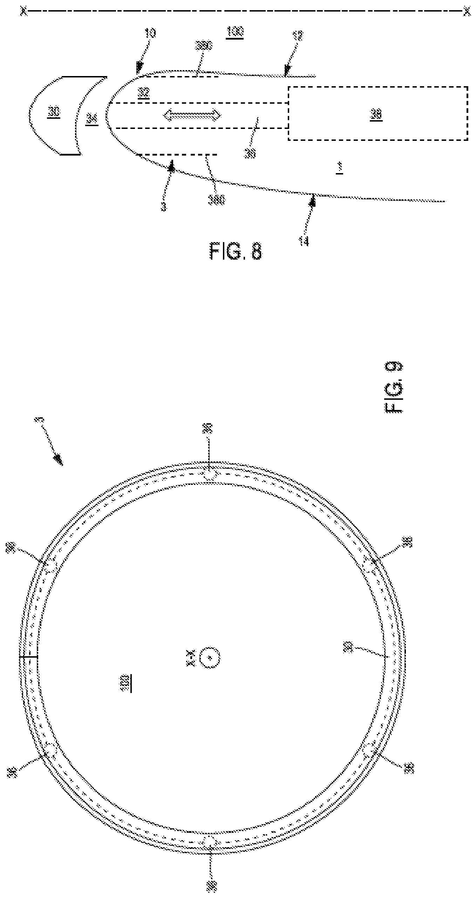

De manière également avantageuse, comme visible sur les figures 9, 13, 15 et 17, le dispositif de modification d'une géométrie de l'entrée d'air 3 comprend une pluralité de tiges de guidage 36, réparties autour de l'axe longitudinal X-X, par exemple équiréparties de manière azimutale. Ainsi, le dispositif de modification d'une géométrie de l'entrée d'air 3 présente une robustesse accrue, et les mouvements de déploiement et de rangement des becs 30, 32 au sein de la nacelle 1 peuvent être mis en oeuvre de manière rapide et précise.

Dans un mode de réalisation, il est prévu un système de dégivrage du premier bec 30 et/ou du deuxième bec 32. En effet, à haute altitude, le risque de givrage est particulièrement important au niveau de la lèvre d'entrée 10. Un tel système garantit donc le bon fonctionnement du dispositif de modification d'une géométrie de l'entrée d'air 3. Avantageusement, le système de dégivrage comprend un canal de circulation de fluide de dégivrage qui s'étend au moins en partie à l'intérieur d'une tige de guidage 36. La tige de guidage 36 peut donc être au moins partiellement creuse, de sorte à véhiculer le fluide de dégivrage, par exemple de l'air chaud. Ceci permet notamment d'assurer le dégivrage du premier bec 30 et/ou du deuxième bec 32 quelle que soit la configuration du dispositif de modification d'une géométrie de l'entrée d'air 3. A cet égard, un mode de réalisation où le premier bec 30 est monté fixe par rapport au deuxième bec 32, comme visible notamment sur la figure 4, est particulièrement avantageux. En effet, la présence de givre sur la surface amont du deuxième bec 32 n'empêche pas l'escamotage du dispositif de modification d'une géométrie de l'entrée d'air 3.

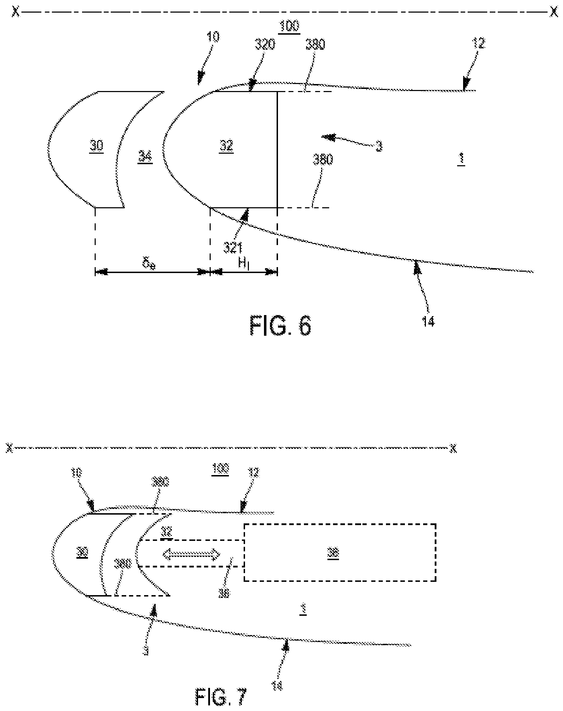

En référence aux figures 7 et 8, le dispositif de modification d'une géométrie de l'entrée d'air 3 peut en outre comprendre un actionneur 38, configuré pour être logé dans la nacelle 1. L'actionneur 38 est également configuré pour mettre en mouvement le premier bec 30 et/ou le deuxième bec 32, entre la première configuration et la deuxième configuration.

Avantageusement, l'actionneur 38 est configuré pour mettre en mouvement la tige de guidage 36, de sorte à passer de la première configuration à la deuxième configuration, et vice-versa.

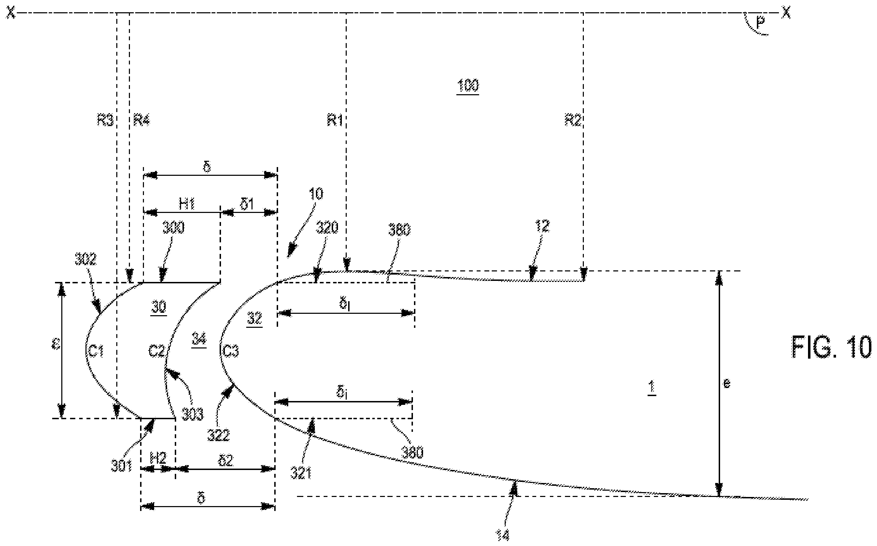

En tout état de cause, en référence aux figures 4 à 8, 10 à 12, 14 et 16, un rail(s) 380 s'étend parallèlement à l'axe longitudinal X-X et est configuré pour guider en translation le premier bec 30 et/ou le deuxième bec 32. Dans ce cas, le premier bec 30 et/ou le deuxième bec 32 peu(ven)t avantageusement être montés en translation sur le rail(s) 380. Comme visible sur la figure 5, les rails 380 présente une longueur axiale $\delta_i$. Comme également visible sur la figure 10, pour des raisons d'encombrement, la longueur axiale $\delta_i$ des rails 380 est de préférence inférieure ou égale à la distance séparant le col d'entrée de la fin de divergence d'entrée d'air 100.

L'actionneur 38 peut être pneumatique. Dans ce cas, il est possible de coupler le système de dégivrage de la nacelle 1, par exemple à air chaud, avec l'actionneur 38.

La présence d'un actionneur 38 pour assurer le déploiement et/ou le rangement du dispositif de modification d'une géométrie de l'entrée d'air 3 n'est cependant pas obligatoire, comme visible sur les figures 4 à 6. En effet, compte-tenu de la structure du dispositif de modification d'une géométrie de l'entrée d'air 3, son déploiement et/ou son rangement peu(ven)t être mis en oeuvre automatiquement de la manière suivante :

- à vitesse élevée d'écoulement d'air, la pression dynamique à l'infini amont de la turbomachine génère un effort axial vers l'aval qui repousse naturellement le dispositif de modification d'une géométrie de l'entrée d'air 3 dans sa position escamotée, ce qui correspond à la première configuration illustrée sur les figures 4, 7 et 11, et
- à vitesse faible d'avancement de l'aéronef sur lequel la turbomachine est montée, et à débit d'air admis par la turbomachine élevé (e.g. au décollage), l'accélération de l'écoulement lors du contournement de la lèvre d'entrée 10 crée un champ de pression autour de ladite lèvre d'entrée 10 qui génère un effort axial dirigé vers l'amont; cet effort déploie naturellement le dispositif de modification d'une géométrie de l'entrée d'air 3, comme visible en figure 6, et le maintien en position déployée, ce qui correspond à la deuxième configuration illustrée sur les figures 8, 10, 12 à 14, et 16.

Il est alors possible de prévoir, alternativement ou en complément de l'actionneur 38, un dispositif de verrouillage configuré pour immobiliser le dispositif de modification d'une géométrie de l'entrée d'air 3 dans la première configuration et/ou dans la deuxième configuration, le déploiement et le rangement pouvant par ailleurs être naturellement assurés par l'écoulement d'air à vitesse élevée et/ou à vitesse faible. Ainsi, le dispositif de modification d'une géométrie de l'entrée d'air 3 présente une robustesse importante, et il n'est plus nécessaire de prévoir des dispositifs de secours pour pallier une éventuelle défaillance de l'actionneur 38.

*Géométrie de premier bec, de deuxième bec, et de canal d'écoulement d'air*

En référence à la figure 10, la géométrie du premier bec 30, du deuxième bec 32, et du canal d'écoulement d'air 34, va à présent être décrite plus en détails. La figure 10 est une vue en coupe du dispositif de de modification d'une géométrie de l'entrée d'air 3 selon un plan radial P par rapport à l'axe longitudinal X-X, c'est-à-dire dans un plan P comprenant l'axe longitudinal X-X.

Comme visible sur la figure 10, la nacelle 1 définit :

- un premier rayon R1 qui correspond au rayon du col de l'entrée, c'est-à-dire à la distance séparant une surface de la paroi interne 12 de la nacelle 1 qui est la plus proche de l'axe longitudinal X-X, dudit axe longitudinal X-X,
- un deuxième rayon R2 qui correspond au rayon de fin de divergence de l'entrée d'air 100, c'est-à-dire à la distance séparant une surface de la paroi interne 12 de la nacelle 1 qui est la plus éloignée de l'axe longitudinal X-X, dudit axe longitudinal X-X, et
- une épaisseur e de lèvre d'entrée 10, qui correspond à la distance séparant la surface de la paroi interne 12 de la nacelle 1 qui est la plus proche de l'axe longitudinal X-X d'une surface de la paroi externe 14 de la nacelle 1 la plus éloignée dudit axe longitudinal X-X.

Comme visible sur la figure 10, le premier bec 30 définit un troisième rayon R3 qui correspond à la distance séparant l'axe longitudinal X-X d'une face radiale externe 301 du premier bec 30, et un quatrième rayon R4 qui correspond à la distance séparant l'axe longitudinal X-X d'une face radiale interne 300 du premier bec 30.

De plus, le premier bec 30 définit un profil amont de premier bec C1. Ce profil amont de premier bec C1 forme une surface amont de premier bec 302, qui est tridimensionnelle de révolution autour de l'axe longitudinal X-X. Une coupe du profil amont de premier bec C1 dans le plan radial P forme alors une ligne géométrique reliant une ligne géométrique formée de la coupe, dans le plan radial P, de la face radiale interne 300 du premier bec 30 à une ligne géométrique formée de la coupe, dans le plan radial P, de la face radiale externe 301 du premier bec 30, en amont du premier bec 30. Cette ligne géométrique peut être définie par n'importe quelle courbe passant par la ligne géométrique formée de la coupe, dans le plan radial P, de la face radiale interne 300 du premier bec 30 et par ligne géométrique formée de la coupe, dans le plan radial P, de la face radiale externe 301 du premier bec 30, en amont du premier bec 30. Suivant la forme de la surface amont de premier bec 302, le profil amont de premier bec C1 peut présenter une forme de ligne géométrique différente dans un autre plan radial P', qui comprend également l'axe longitudinal X-X et qui est différent du plan radial P.

En outre, le premier bec 30 définit un profil aval de premier bec C2. Ce profil aval de premier bec C2 forme une surface aval de premier bec 303, qui est tridimensionnelle de révolution autour de l'axe longitudinal X-X. Une coupe du profil aval de premier bec C2 dans le plan radial P forme alors une ligne géométrique reliant une ligne géométrique formée de la coupe, dans le plan radial P, de la face radiale interne 300 du premier bec 30 à une ligne géométrique formée de la coupe, dans le plan radial P, de la face radiale externe 301 du premier bec 30, en aval du premier bec 30. Cette ligne géométrique peut être définie par n'importe quelle courbe passant par la ligne géométrique formée de la coupe, dans le plan radial P, de la face radiale interne 300 du premier bec 30 et par la ligne géométrique formée de la coupe, dans le plan radial P, de la face radiale externe 301 du premier bec 30, en aval du premier bec 30. Suivant la forme de la surface aval de premier bec 303, le profil aval de premier bec C2 peut présenter une forme différente de ligne géométrique dans un autre plan radial P', qui comprend également l'axe longitudinal X-X et qui est différent du plan radial P.

Par ailleurs, le premier bec 30 définit une envergure radiale $\varepsilon$ correspondant à la différence entre le troisième rayon R3 et le quatrième rayon R4, c'est-à-dire à la distance séparant la face radiale interne 300 du premier bec 30 de sa face radiale externe 301. L'envergure radiale $\varepsilon$ est limitée par l'épaisseur e de la lèvre d'entrée 10, pour pouvoir facilement déployer et ranger le dispositif de modification d'une géométrie de l'entrée d'air 3. De préférence, un rapport de l'envergure radiale $\varepsilon$ de premier bec 30 sur l'épaisseur e de lèvre d'entrée 10 est compris entre 0,4 et 0,6. En tout état de cause, la face radiale interne 300 du premier bec 30 s'étend le plus proche possible de l'axe longitudinal X-X, c'est-à-dire substantiellement dans le même plan que la surface de la paroi interne 12 de la nacelle 1 qui est la plus éloignée de l'axe longitudinal X-X, comme visible sur la figure 10. Ainsi, le canal d'écoulement d'air 34 débouche le plus près possible de la surface radiale externe du flux d'air pénétrant au sein de l'entrée d'air 100. De cette manière, dans la deuxième configuration, le flux d'air supplémentaire injecté par le canal d'écoulement d'air 34 présente des lignes de courant qui sont le plus parallèles possibles au lignes de courant dudit flux d'air pénétrant au sein de l'entrée d'air 100.

En outre, le premier bec 30 définit une longueur de face radiale interne de premier bec H1, correspondant à la distance séparant l'extrémité radiale interne du profil amont de premier bec C1 de l'extrémité radiale interne d'une surface aval du premier bec 30. Comme visible sur la figure 10, la longueur de face radiale interne de premier bec H1 est dimensionnée de sorte à ce que ladite face radiale interne 300 puisse servir de guide lors du passage de la première configuration à la deuxième configuration, et vice-versa. En outre, la longueur de face radiale interne de premier bec H1 est dimensionnée de sorte à garantir l'étanchéité du dispositif de modification de la géométrie de l'entrée d'air 3 en position escamotée, par contact avec la paroi interne 12 de la nacelle 1. Ceci permet notamment de conserver les mêmes performances aérodynamiques, quelle que soit la configuration du dispositif modification de la géométrie de l'entrée d'air 3, c'est-à-dire en position déployée, en position escamotée, ou dans une position intermédiaire entre ces deux positions.

De plus, le premier bec 30 définit une longueur de face radiale externe de premier bec H2, correspondant à la distance séparant l'extrémité radiale externe du profil amont de premier bec C1 de l'extrémité radiale externe d'une surface aval du premier bec 30. Comme visible sur la figure 10, la longueur de face radiale externe de premier bec H2 est dimensionnée de sorte à ce que ladite face radiale externe 301 puisse servir de guide lors du passage de la première configuration à la deuxième configuration, et vice-versa. En outre, la longueur de face radiale externe de premier bec H2 est dimensionnée de sorte à garantir l'étanchéité du dispositif de modification de la géométrie de l'entrée d'air 3 en position escamotée, par contact avec la paroi externe 14 de la nacelle 1. Ceci permet notamment de conserver les mêmes performances aérodynamiques, quelle que soit la configuration du dispositif modification de la géométrie de l'entrée d'air 3, c'est-à-dire en position déployée, en position escamotée, ou dans une position intermédiaire entre ces deux positions.

Enfin, en référence aux figures 4 à 6, le deuxième bec 32 définit une longueur $H_i$ de face radiale interne 320 de deuxième bec 32, correspondant à la distance séparant l'extrémité radiale interne du profil amont de deuxième bec C3 de l'extrémité radiale interne d'une surface aval du deuxième bec 32. Cette longueur $H_i$ est également égale à la longueur de face radiale externe 321 de deuxième bec 32, correspondant à la distance séparant l'extrémité radiale externe du profil amont de deuxième bec C3 de l'extrémité radiale externe d'une surface aval du deuxième bec 32. Comme visible sur ces figures, la longueur de face radiale interne et/ou externe de deuxième bec $H_i$ est dimensionnée de sorte à ce qu'elle puisse servir de guide lors du passage de la première configuration à la deuxième configuration, et vice-versa.

En outre, la longueur de face radiale interne et/ou externe de deuxième bec $H_i$ est dimensionnée de sorte à garantir l'étanchéité du dispositif de modification de la géométrie de l'entrée d'air 3 en position escamotée, par contact avec la paroi interne 12 de la nacelle 1. Ceci permet notamment de conserver les mêmes performances aérodynamiques, quelle que soit la configuration du dispositif modification de la géométrie de l'entrée d'air 3, c'est-à-dire en position déployée, en position escamotée, ou dans une position intermédiaire entre ces deux positions

Comme également visible sur la figure 10, le deuxième bec 32 présente également un profil amont de deuxième bec C3. Ce profil amont de deuxième bec C3 forme une surface amont de deuxième bec 322, qui est tridimensionnelle de révolution autour de l'axe longitudinal X-X. Une coupe du profil aval de premier bec C2 dans le plan radial P forme alors une ligne géométrique reliant une ligne géométrique formée de la coupe, dans le plan radial P, de la face radiale interne 320 du deuxième bec 32 à une ligne géométrique formée de la coupe, dans le plan radial P, de la face radiale externe 321 du deuxième bec 32. Cette ligne géométrique peut être définie par n'importe quelle courbe passant par la ligne géométrique formée de la coupe, dans le plan radial P, de la face radiale interne 320 du deuxième bec 32 et par la ligne géométrique formée de la coupe, dans le plan radial P, de la face radiale externe 321 du deuxième bec 32. Suivant la forme de la surface amont de deuxième bec 322, le profil amont de deuxième bec C3 peut présenter une forme de ligne géométrique différente dans un autre plan radial P', qui comprend également l'axe longitudinal X-X et qui est différent du plan radial P.

En tout état de cause, le profil amont de deuxième bec C3 présente, dans la deuxième configuration, une continuité tangentielle avec un profil de la nacelle 1 défini dans le plan radial P. Plus précisément, comme visible sur la figure 10, la nacelle 1 présente également un profil dans le plan radial P qui prend la forme de deux lignes géométriques correspondant respectivement à la paroi interne 12 et à la paroi externe 14 de la nacelle 1. Or, à l'intersection du profil amont de deuxième bec C3 avec le profil de la nacelle 1, respectivement au niveau de la paroi interne 12 et de la paroi externe 14, une tangente locale du profil amont de deuxième bec C3 est confondue avec une tangente locale du profil de nacelle 1. En d'autres termes, dans la deuxième configuration, le deuxième bec 32 épouse exactement les rebords respectifs de la paroi interne 12 et de la paroi externe 14 de la nacelle 1, de sorte à n'offrir aucune perturbation au flux d'air pénétrant au sein de l'entrée d'air 100. Ceci assure une minimisation des perturbations additionnelles du flux d'air. Cette continuité tangentielle de deuxième configuration est présente dans n'importe quel plan radial, tout autour de l'axe longitudinal X-X.

Dans un mode de réalisation privilégié, par exemple illustré sur la figure 10, le profil amont de premier bec C1 est identique au profil amont de deuxième bec C3. Plus précisément, dans tout plan radial P, la ligne géométrique définissant le profil amont de premier bec C1 est identique à la ligne géométrique définissant le profil amont de deuxième bec C3, c'est-à-dire qu'elles peuvent être exactement superposées sur toute leur longueur. De cette manière, la lèvre d'entrée 10 présente exactement la même forme dans la première configuration et dans la deuxième configuration.

Toujours en référence à la figure 10, le canal découlement 34 présente, quelle que soit la position du dispositif de modification d'une géométrie de l'entrée d'air 3 :

- une longueur axiale interne $\delta 1$ définie comme la distance séparant l'extrémité aval de la face radiale interne de premier bec 300 de l'extrémité amont de la face radiale interne de deuxième bec 320, et
- une longueur axiale externe $\delta 2$ définie comme la distance séparant l'extrémité aval de la face radiale externe de premier bec 301 de l'extrémité amont de la face radiale externe de deuxième bec 321.

Dans une configuration avantageuse du dispositif de modification d'une géométrie de l'entrée d'air 3, la longueur axiale interne $\delta 1$ du canal d'écoulement d'air 34 est inférieure à la longueur axiale externe $\delta 2$ du canal d'écoulement d'air 34. Ceci permet de définir une géométrie convergente de canal d'écoulement d'air 34, comme visible sur la figure 10.

En outre, dans un mode de réalisation où le premier bec 30 est monté fixe par rapport au deuxième bec 32, comme visible sur la figure 4, la longueur axiale interne $\delta 1$ et la longueur axiale externe $\delta 2$ sont invariantes quelle que soit la position du dispositif de modification d'une géométrie de l'entrée d'air 3.

Par ailleurs, le dispositif de modification d'une géométrie de l'entrée d'air 3 présente, quelle que soit sa position, une envergure axiale $\delta_e$ définie comme la somme de :

la longueur de face radiale interne de premier bec H1 et de la longueur axiale interne de canal d'écoulement $\delta 1$, ou
la longueur de face radiale externe de premier bec H2 et de la longueur axiale externe de canal d'écoulement $\delta 2$.

De là, le dispositif de modification d'une géométrie de l'entrée d'air 3 définit une envergure axiale maximale $\delta$ comme la plus grande de la distance séparant l'extrémité radiale externe du profil amont de premier bec C1 de l'extrémité radiale externe du rebord amont de paroi interne 12 de la nacelle 1, et de la distance séparant l'extrémité radiale interne du profil amont de premier bec C1 de l'extrémité radiale interne du rebord amont de paroi interne 12 de la nacelle 1, lorsque le dispositif de modification d'une géométrie de l'entrée d'air 3 est en position déployée. En d'autres termes, l'envergue axiale maximale $\delta$ correspond à l'envergure axiale

$\delta_e$ du dispositif de modification d'une géométrie de l'entrée d'air 3 lorsqu'il se trouve en position déployée.

L'espace disponible pour l'extension du dispositif de modification d'une géométrie de l'entrée d'air 3 est limitée au sein de la nacelle 1, lorsque ledit dispositif de modification d'une géométrie de l'entrée d'air 3 est dans la première configuration, c'est-à-dire en position escamotée. Ainsi, la longueur axiale $\delta_i$ des rails 380 est de préférence égale à l'envergue axiale $\delta_e$ en position escamotée, et en tout état de cause n'est pas inférieure à l'envergue axiale $\delta_e$.

En tout état de cause, la longueur axiale interne de canal d'écoulement d'air $\delta 1$ et la longueur axiale externe de canal d'écoulement d'air $\delta 2$ sont chacune inférieure à l'envergure axiale $\delta_e$ du dispositif de modification d'une géométrie de l'entrée d'air 3. En outre, elles sont chacune avantageusement non nulles, pour garantir l'existence du canal d'écoulement d'air 34. Par ailleurs, dans un mode de réalisation où le premier bec 30 et le deuxième bec 32 peuvent être mis en mouvement axial indépendamment l'un de l'autre, la longueur axiale interne de canal d'écoulement d'air $\delta 1$ et la longueur axiale externe de canal d'écoulement d'air $\delta 2$ peuvent prendre une valeur minimale qui dépend du point de contact entre le premier bec 30 et le deuxième bec 32. Ceci est notamment visible sur la figure 5. Comme visible sur cette figure, cela permet un avantageux gain de place en position escamotée.

Le canal d'écoulement d'air 34 présente donc, dans le plan radial P :

- un profil amont, correspondant au profil aval de premier bec C2, et
- un profil aval, correspondant au profil amont de deuxième bec C3.

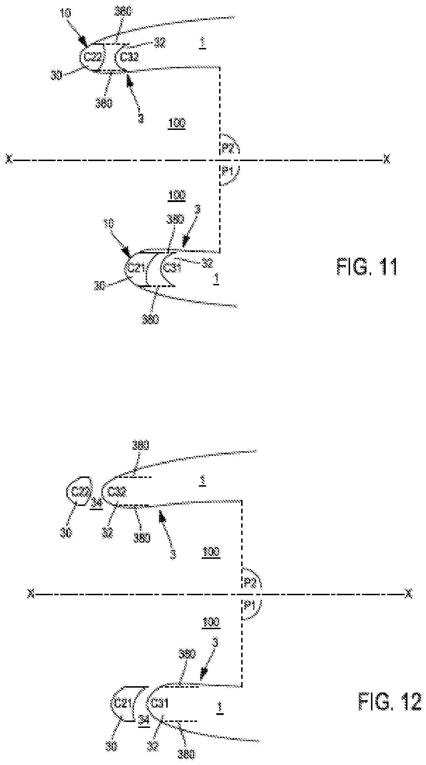

Avantageusement, le canal d'écoulement d'air 34 peut présenter une géométrie différente autour de l'axe longitudinal X-X. En d'autres termes, comme visible notamment sur les figures 11 et 12, le canal d'écoulement d'air 34 présente :

- dans un premier plan radial P1 :

    ○ un premier profil amont, correspondant à un premier profil aval de premier bec C21, et
    ○ un premier profil aval, correspondant à un premier profil amont de deuxième bec C31, et

- dans un deuxième plan radial P2 :

    ○ un deuxième profil amont, correspondant à un deuxième profil aval de premier bec C22, et
    ○ un deuxième profil aval, correspondant à un deuxième profil amont de deuxième bec C32.

Plus précisément, le deuxième profil amont de deuxième bec C32 étant différent du premier profil amont de deuxième bec C31, et/ou le deuxième profil aval de premier bec C22 étant différent du premier profil aval de premier bec C21, comme visible sur les figures 11 et 12, le canal d'écoulement d'air 34 présente, dans le premier plan radial P1, une première section longitudinale, et dans le deuxième plan radial P2, une deuxième section longitudinale, la deuxième section longitudinale étant différente de la première section longitudinale. Par section « longitudinale » on comprend une section du canal d'écoulement d'air 34 prise selon un plan radial par rapport à l'axe longitudinal X-X.

Les figures 11 à 13 illustrent ainsi des sections longitudinales différentes du canal d'écoulement d'air 34 respectivement dans la première configuration de dispositif de modification d'une géométrie de l'entrée d'air 3, et dans la deuxième configuration dudit dispositif 3. Sur chacune de ces figures, on observe qu'une première section longitudinale est convergente dans un premier plan radial P1, c'est-à-dire que le canal d'écoulement d'air 34 se rétrécit au fur et à mesure qu'il se rapproche de l'axe longitudinal X-X, tandis qu'une deuxième section longitudinale est convergente-divergente dans un deuxième plan radial P2, c'est-à-dire que le canal d'écoulement d'air 34 se rétrécit dans un premier temps à mesure qu'il se rapproche de l'axe longitudinal X-X, puis augmente à nouveau jusqu'à déboucher dans l'entrée d'air 100.

Ceci permet d'optimiser localement l'effet aérodynamique de la modification de la géométrie de l'entrée d'air 100. Cette possibilité est notamment avantageuse lorsque la nacelle 1 n'est pas axisymétrique, comme visible sur les figures 12 à 13. En effet, il est alors possible de compenser l'asymétrie de la nacelle 1 par modification de l'écoulement du flux d'air admis par l'entrée d'air 100, grâce à des profils amont et/ou des profils aval de canal d'écoulement d'air 34 qui définissent des sections de canal d'écoulement d'air 34 convergentes et/ou convergentes-divergentes, suivant leur position azimutale autour de l'axe longitudinal X-X. Par exemple, au décollage, le point d'arrêt de l'écoulement se situe généralement à l'extérieur de la nacelle 1, et le flux d'air contourne la lèvre d'entrée 10 de l'extérieur vers l'intérieur sur toute la circonférence de la nacelle 1. En revanche, lorsque l'axe longitudinal X-X est incliné par rapport à l'horizontal (i.e. que l'aéronef prend de l'incidence), le point d'arrêt peut se situer plus vers l'intérieur de la nacelle 1 dans le deuxième plan radial P2, mais à l'extérieur dans le premier plan radial P1. La forme différente dans les deux plans radiaux P1 et P2 permet à l'écoulement de contourner la lèvre d'entrée 10 dans les deux sens dans le deuxième plan radial P2, tandis que, dans le premier plan radial P1, l'écoulement contourne toujours la lèvre d'entrée 10 dans le même sens.

De cette manière, il est possible de définir un degré de convergence géométrique du canal d'écoulement d'air 34. Plus précisément, en supposant que la surface radiale interne A1 et la surface radiale externe A2 du canal d'écoulement d'air 34 sont des génératrices de cylindre à base circulaire, on peut définir un taux de convergence τ du canal d'écoulement d'air 34 comme le rapport de la surface radiale interne A1 du canal d'écoulement d'air 34 sur la surface radiale externe A2 du canal d'écoulement d'air 34 :

$$\tau = \frac{A1}{A2} = \frac{2\pi R4 \delta 1}{2\pi R3 \delta 2} = \frac{R4 \delta 1}{R3 \delta 2}$$

Dans la mesure où le rapport du troisième rayon R3 sur le quatrième rayon R4 est toujours supérieur à 1, le canal d'écoulement d'air 34 est naturellement convergent. En revanche, le rapport de la longueur axiale interne δ1 du canal d'écoulement d'air 34 sur sa longueur axiale externe δ2 permet d'influer sur le taux de convergence τ. En effet, ce rapport vaut :

$$\frac{\delta 1}{\delta 2} = \frac{\delta - H1}{\delta - H2}$$

Ainsi, la convergence peut être définie par le choix respectif de la longueur de face radiale interne de premier bec H1 et de la longueur de face radiale externe de premier bec H2, qui sont par ailleurs chacune limitées par l'envergure axiale δ du dispositif de modification d'une géométrie de l'entrée d'air 3.

Le canal d'écoulement d'air 34 permet, dans la deuxième configuration, de fournir une modification supplémentaire de quantité de mouvement au sein du fluide admis par l'entrée d'air 100. Cette modification peut consister en une accélération ou en une décélération du fluide admis. A basse vitesse d'écoulement, typiquement dans le domaine subsonique, une accélération est généralement recherchée, et il faut alors que le taux de convergence τ soit inférieur à 1, c'est-à-dire que la section longitudinale de canal d'écoulement d'air 34 soit convergente. En tout état de cause, , la structure du dispositif de modification d'une géométrie de l'entrée d'air 3 permet à la fois des taux de convergence τ importants, c'est-à-dire proche de 0, mais aussi très faibles, c'est-à-dire proche de 1, voire même des divergences, c'est-à-dire lorsque le taux de convergence τ est supérieur à 1.

*Modes de réalisation du dispositif de modification d'une géométrie de l'entrée d'air*

Dans un mode de réalisation où une première section longitudinale du canal d'écoulement d'air 34, dans un premier plan radial P1, est différente d'une deuxième section longitudinale, dans un deuxième plan radial P2, l'envergure axiale δ du dispositif de modification d'une géométrie de l'entrée d'air 3 est la même dans le premier plan P1 et dans le deuxième plan P2, comme visible par exemple sur les figures 11 et 12. Ceci garantit une translation rectiligne simple du dispositif de modification d'une géométrie de l'entrée d'air 3.

Comme visible sur les figures 9, 13, 15 et 17, dans un mode de réalisation le premier bec 30 et le deuxième bec 32 présentent une symétrie de révolution autour de l'axe longitudinal X-X, dans au moins un secteur angulaire donné. Ceci permet une mise en oeuvre aisée du déploiement et du rangement du dispositif de modification d'une géométrie de l'entrée d'air 3, tout en assurant une compacité de la nacelle 1 à la fois dans la première configuration et dans la deuxième configuration. En outre, cela minimise les perturbations au sein du flux admis par l'entrée d'air 100. En tout état de cause, les profils amont C1, C3 des becs 30, 32 peuvent ou non présenter une symétrie de révolution autour de l'axe longitudinal X-X dans au moins un secteur angulaire donné. Le déploiement et le rangement du dispositif de modification d'une géométrie de l'entrée d'air 3 sont dans tous les cas facilités par le fait que les faces radiales internes 300, 320 et externes 301, 321 des becs 30, 32 sont des génératrices d'un cylindre de révolution autour de l'axe longitudinal X-X, qui est également la direction de déploiement et de rangement.

Cependant, les différentes portions angulaires de premier bec 30 et/ou de deuxième bec 32 peuvent être déplacées entre la première configuration et la deuxième configuration, et vice-versa, indépendamment les unes des autres. En d'autres termes, le dispositif de modification d'une géométrie de l'entrée d'air 3 peut comprendre une pluralité de premiers becs 30 reliés à une pluralité de deuxièmes becs 32, chacun s'étendant selon une portion angulaire autour de l'axe longitudinal X-X, et chacun étant mobiles en translation entre une première configuration et une deuxième configuration. Ainsi, un premier bec 30 et un deuxième bec 32 peuvent être dans la première configuration, tandis qu'un autre premier bec 30 et un autre deuxième bec 32 sont dans la deuxième configuration. Ceci garantit une modularité d'utilisation du dispositif de modification d'une géométrie de l'entrée d'air 3, suivant les différents écoulements admis au sein de l'entrée d'air 100. Avantageusement, la pluralité de premiers becs 30 et la pluralité de deuxièmes becs peuvent également présenter des profils amont C1, C3 et aval C2 qui sont différents les uns des autres.

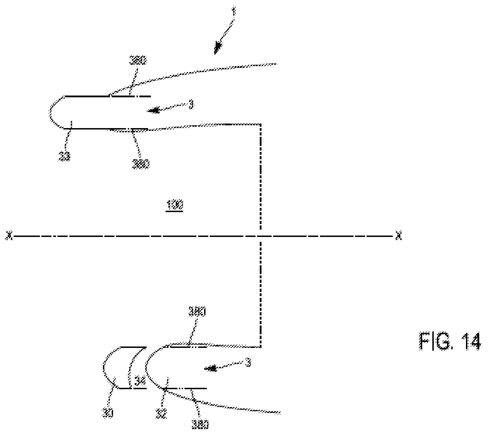

En référence aux figures 14 à 17, il est possible que la présence d'un canal d'écoulement d'air 34 ne soit pas nécessaire, voire indésirable, pour des portions angulaires de l'entrée d'air 100, typiquement la portion azimutale supérieure, comme illustré sur les figures 14 à 17. En effet, la présence du canal d'écoulement d'air 34 pourrait générer des perturbations aérodynamiques venant s'ajouter aux fortes incidences au sein de l'écoulement au niveau de ces portions d'entrées d'air 100.

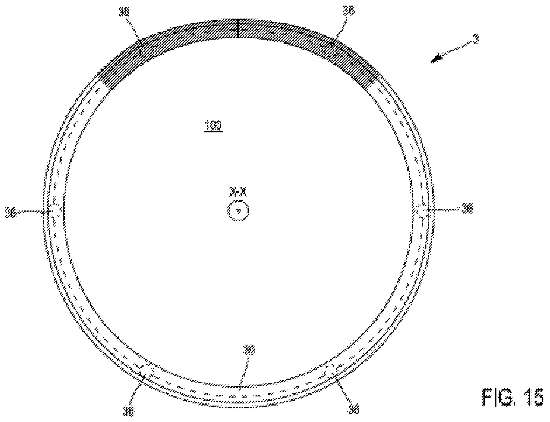

Par conséquent, dans un premier mode de réalisation illustré sur les figures 14 et 15, il est possible de prévoir que, sur au moins une portion angulaire du dispositif de modification d'une géométrie de l'entrée d'air 3, le premier bec 30 et le deuxième bec 32 soient reliés de telle sorte que la longueur axiale interne δ1 et la longueur axiale externe δ2 du canal d'écoulement d'air 34 soit nulle. Sur au moins cette portion angulaire, le premier bec 30 et le deuxième bec 32 forment alors un bec unique 33, également mobile en translation selon l'axe longitudinal X-X par rapport à la nacelle 1.

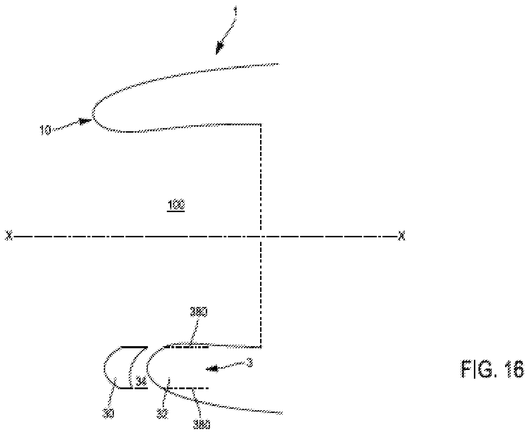

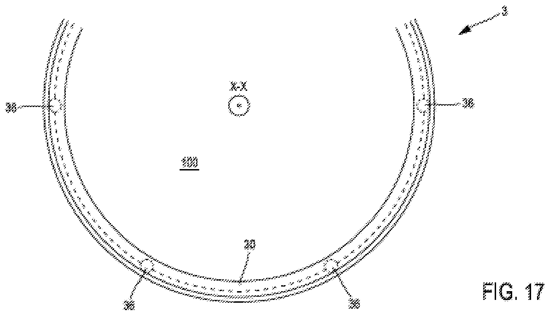

Dans un deuxième mode de réalisation, illustré sur les figures 16 et 17, le premier bec 30 et le deuxième bec 32 ne s'étendent pas tout autour de l'axe longitudinal X-X, mais seulement selon une portion angulaire, par exemple sur les parties latérales et inférieures de l'entrée d'air 100. La partie supérieure de l'entrée d'air 100 est alors bordée par une lèvre d'entrée d'air 10 fixe par rapport à la nacelle 1. En d'autres termes, dans ce deuxième mode de réalisation, le premier bec 30 et le deuxième bec 32 s'étendent sur une première portion angulaire de la nacelle 1, une deuxième portion angulaire de la nacelle étant bordée par une partie fixe de la lèvre d'entrée d'air 10. Plus précisément, sur cette deuxième portion angulaire, la lèvre d'entrée d'air 10 ne comprend pas de dispositif de modification d'une géométrie de l'entrée d'air 3.

**Revendications**

**1.** Ensemble pour turbomachine comprenant :

- une nacelle (1) présentant un axe longitudinal (X-X) et comprenant une lèvre d'entrée (10) définissant une entrée d'air (100), et
- un dispositif de modification d'une géométrie de l'entrée d'air (3), ledit dispositif (3) comprenant :

- un premier bec (30),
- un deuxième bec (32),

le premier bec (30) et le deuxième bec (32) étant mobiles en translation selon l'axe longitudinal (X-X) par rapport à la nacelle (1) entre :

- une première configuration où le premier bec (30) forme la lèvre d'entrée (10) et le deuxième bec (32) s'étend à l'intérieur de la nacelle (1), et
- une deuxième configuration où le premier bec (30) s'étend à distance de la lèvre d'entrée (10), et le deuxième bec (32) forme la lèvre d'entrée (10), de sorte à définir un canal d'écoulement d'air (34) entre une surface aval du premier bec (30) et une surface amont du deuxième bec (32),

l'ensemble étant **caractérisé en ce que** le premier bec présente :

- dans un premier plan radial (P1) par rapport à l'axe longitudinal (X-X), un premier profil aval de premier bec (C21), et
- dans un deuxième plan radial (P2) par rapport à l'axe longitudinal (X-X), un deuxième profil aval de premier bec (C22),

le deuxième profil aval de premier bec (C22) étant différent du premier profil aval de premier bec (C21), de sorte à ce que le canal d'écoulement d'air (34) présente, dans le premier plan radial (P1), une première section longitudinale, et dans le deuxième plan radial (P2), une deuxième section longitudinale, la deuxième section longitudinale étant différente de la première section longitudinale.

**2.** Ensemble pour turbomachine selon la revendication 1, dans lequel le deuxième bec (32) présente, dans un plan radial (P) par rapport à l'axe longitudinal (X-X), un profil amont de deuxième bec (C3), le profil amont de deuxième bec (C3) présentant, dans la deuxième configuration, une continuité tangentielle avec un profil de la nacelle (1) défini dans le plan radial (P).

**3.** Ensemble pour turbomachine selon l'une des revendications 1 et 2, dans lequel le premier bec (30) présente, dans un plan radial (P) par rapport à l'axe longitudinal (X-X), un profil amont de premier bec (C1), et le deuxième bec (32) présente, dans le plan radial (P), un profil amont de deuxième bec (C3), le profil amont de deuxième bec (C3) étant identique au profil amont de premier bec (C1).

**4.** Ensemble pour turbomachine selon l'une des revendications 1 à 3, dans lequel le deuxième bec (32) présente :

- dans un premier plan radial (P1) par rapport à l'axe longitudinal (X-X), un premier profil amont de deuxième bec (C31), et
- dans un deuxième plan radial (P2) par rapport à l'axe longitudinal (X-X), un deuxième profil amont de deuxième bec (C32),
- le deuxième profil amont de deuxième bec (C32) étant différent du premier profil amont de deuxième bec (C31), de sorte à ce que le canal d'écoulement d'air (34) présente, dans le premier plan radial (P1), une première section longitudinale, et dans le deuxième plan radial (P2), une deuxième section longitudinale, la deuxième section longitudinale étant différente de la première section longitudinale.

**5.** Ensemble pour turbomachine selon l'une des revendications 1 à 4, dans lequel, sur au moins une portion angulaire du dispositif de modification d'une géométrie de l'entrée d'air (3), le premier bec (30) et le deuxième bec (32) sont reliés de sorte à former un bec unique (33), également mobile en translation selon l'axe longitudinal (X-X) par rapport à la nacelle (1).

**6.** Ensemble pour turbomachine selon l'une des revendications 1 à 5, dans lequel le premier bec (30) et le deuxième bec (32) s'étendent sur une première portion angulaire de la nacelle (1), une deuxième portion angulaire de la nacelle (2) étant bordée par une partie fixe de la lèvre d'entrée d'air (10).

**7.** Ensemble pour turbomachine selon l'une des revendications 1 à 6, dans lequel le dispositif de modification d'une géométrie de l'entrée d'air (3) comprend une tige de guidage (36) s'étendant parallèlement à l'axe longitudinal (X-X), et reliant le premier bec (30) au deuxième bec (32) de manière à ce que, sur au moins une portion angulaire du dispositif de modification d'une géométrie de l'entrée d'air (3), le premier bec (30) soit monté fixe par rapport au deuxième bec (32).

**8.** Ensemble pour turbomachine selon l'une des revendications 1 à 7, dans lequel le dispositif de modification d'une géométrie de l'entrée d'air (3) comprend une tige de guidage (36) s'étendant parallèlement à l'axe longitudinal (X-X), la tige de guidage (36) étant télescopique de sorte à ce que, sur au moins une portion angulaire du dispositif de modification d'une géométrie de l'entrée d'air (3), le mouvement du premier bec (30) soit indépendant du mouvement du deuxième bec (32).

**9.** Ensemble pour turbomachine selon l'une des revendications 7 et 8, comprenant un système de dégivrage du premier bec (30) et/ou du deuxième bec (32), comprenant un canal de circulation de fluide de dégivrage s'étendant au moins en partie à l'intérieur de la tige de guidage (36).

**10.** Ensemble pour turbomachine selon l'une des revendications 1 à 9, dans lequel le dispositif de modification d'une géométrie de l'entrée d'air (3) comprend en outre un actionneur (36) logé dans la nacelle (1), et configuré pour mettre en mouvement le premier bec (30) et le deuxième bec (32) entre la première configuration et la deuxième configuration.

**11.** Ensemble pour turbomachine selon l'une des revendications 1 à 10, dans lequel la nacelle (1) présente une forme non-axisymétrique.

**12.** Turbomachine comprenant un ensemble selon l'une des revendications 1 à 11.

**Patentansprüche**

**1.** Anordnung für eine Turbomaschine, umfassend:

- eine Gondel (1), die eine Längsachse (X-X) aufweist und eine Eingangslippe (10) umfasst, die einen Lufteinlass (100) definiert, und
- eine Vorrichtung zum Verändern einer Geometrie des Lufteinlasses (3), wobei die Vorrichtung (3) umfasst:

- eine erste Nase (30), und
- eine zweite Nase (32),

wobei die erste Nase (30) und die zweite Nase (32) gemäß der Längsachse (X-X) im Verhältnis zur Gondel (1) translatorisch beweglich sind zwischen:

- einer ersten Konfiguration, in der die erste Nase (30) die Eingangslippe (10) bildet und sich die zweite Nase (32) im Inneren der Gondel (1) erstreckt, und
- einer zweiten Konfiguration, in der sich die erste Nase (30) beabstandet von der Eingangslippe (10) erstreckt und die zweite Nase (32) die Eingangslippe (10) bildet, so dass ein Luftströmungskanal (34) zwischen einer stromabwärtigen Oberfläche der ersten Nase (30) und einer stromaufwärtigen Oberfläche der zweiten Nase (32) definiert wird,

wobei die Anordnung **dadurch gekennzeichnet ist, dass** die erste Nase aufweist:

- in einer ersten radialen Ebene (P1) im Verhältnis zur Längsachse (X-X) ein erstes stromabwärtiges erstes Nasenprofil (C21), und
- in einer zweiten radialen Ebene (P2) im Verhältnis zur Längsachse (X-X) ein zweites stromabwärtiges erstes Nasenprofil (C22),

wobei das zweite stromabwärtige erste Nasenprofil (C22) vom ersten stromabwärtigen ersten Nasenprofil (C21) unterschiedlich ist, so dass der Luftströmungskanal (34) in der ersten radialen Ebene (P1) einen ersten Längsschnitt und in der zweiten radialen Ebene (P2) einen zweiten Längsschnitt aufweist, wobei der zweite Längsschnitt vom ersten Längsschnitt unterschiedlich ist.

**2.** Anordnung für eine Turbomaschine nach Anspruch 1, wobei die zweite Nase (32) in einer radialen Ebene (P) im Verhältnis zur Längsachse (X-X) ein stromaufwärtiges zweites Nasenprofil (C3) aufweist, wobei das stromaufwärtige zweite Nasenprofil (C3) in der zweiten Konfiguration eine Tangentialkontinuität mit einem in der radialen Ebene (P) definierten Profil der Gondel (1) aufweist.

**3.** Anordnung für eine Turbomaschine nach einem der Ansprüche 1 und 2, wobei die erste Nase (30) in einer radialen Ebene (P) im Verhältnis zur Längsachse (X- X) ein stromaufwärtiges erstes Nasenprofil (C1) aufweist und die zweite Nase (32) in der radialen Ebene (P) ein stromaufwärtiges zweites Nasenprofil (C3) aufweist, wobei das stromaufwärtige zweite Nasenprofil (C3) mit dem stromaufwärtigen ersten Nasenprofil (C1) identisch ist.

**4.** Anordnung für eine Turbomaschine nach einem der Ansprüche 1 bis 3, wobei die zweite Nase (32) aufweist:

- in einer ersten radialen Ebene (P1) im Verhältnis zur Längsachse (X-X) ein erstes stromaufwärtiges zweites Nasenprofil (C31), und
- in einer zweiten radialen Ebene (P2) im Verhältnis zur Längsachse (X-X) ein zweites stromaufwärtiges zweites Nasenprofil (C32),
- wobei das zweite stromaufwärtige zweite Nasenprofil (C32) vom ersten stromaufwärtigen zweiten Nasenprofil (C31) unterschiedlich ist, so dass der Luftströmungskanal (34) in der ersten radialen Ebene (P1) einen ersten Längsschnitt und in der zweiten radialen Ebene (P2) einen zweiten Längsschnitt aufweist, wobei der zweite Längsschnitt vom ersten Längsschnitt unterschiedlich ist.

**5.** Anordnung für eine Turbomaschine nach einem der Ansprüche 1 bis 4, wobei über mindestens einen Winkelabschnitt der Vorrichtung zum Verändern einer Geometrie des Lufteinlasses (3) die erste Nase (30) und die zweite Nase (32) derart verbunden sind, dass sie eine einzige Nase (33) bilden, die ebenfalls gemäß der Längsachse (X-X) im Verhältnis zur Gondel (1) translatorisch beweglich ist.

**6.** Anordnung für eine Turbomaschine nach einem der Ansprüche 1 bis 5, wobei sich die erste Nase (30) und die zweite Nase (32) über einen ersten Winkelabschnitt der Gondel (1) erstrecken, wobei ein zweiter Winkelabschnitt der Gondel (2) von einem festen Teil der Lufteingangslippe (10) gesäumt ist.

**7.** Anordnung für eine Turbomaschine nach einem der Ansprüche 1 bis 6, wobei die Vorrichtung zum Verändern einer Geometrie des Lufteinlasses (3) eine Führungsstange (36) umfasst, die sich parallel zur Längsachse (X-X) erstreckt und die erste Nase (30) mit der zweiten Nase (32) derart verbindet, dass über mindestens einen Winkelabschnitt der Vorrichtung zum Verändern einer Geometrie des Lufteinlasses (3) die erste Nase (30) im Verhältnis zur zweiten Nase (32) fest angebracht ist.

**8.** Anordnung für eine Turbomaschine nach einem der Ansprüche 1 bis 7, wobei die Vorrichtung zum Verändern einer Geometrie des Lufteinlasses (3) eine Führungsstange (36) umfasst, die sich parallel zur Längsachse (X-X) erstreckt, wobei die Führungsstange (36) teleskopisch ist, so dass über mindestens einen Winkelabschnitt der Vorrichtung zum Verändern einer Geometrie des Lufteinlasses (3) die Bewegung der ersten Nase (30) von der Bewegung der zweiten Nase (32) unabhängig ist.

**9.** Anordnung für eine Turbomaschine nach einem der Ansprüche 7 und 8, umfassend ein Enteisungssystem der ersten Nase (30) und/oder der zweiten Nase (32), umfassend einen Zirkulationskanal für Enteisungsfluid, der sich mindestens zum Teil im Inneren der Führungsstange (36) erstreckt.

**10.** Anordnung für eine Turbomaschine nach einem der Ansprüche 1 bis 9, wobei die Vorrichtung zum Verändern einer Geometrie des Lufteinlasses (3) ferner einen Aktuator (36) umfasst, der in der Gondel (1) untergebracht und dazu ausgelegt ist, die erste Nase (30) und die zweite Nase (32) zwischen der ersten Konfiguration und der zweiten Konfiguration in Bewegung zu versetzen.

**11.** Anordnung für eine Turbomaschine nach einem der Ansprüche 1 bis 10, wobei die Gondel (1) eine nicht achssymmetrische Form aufweist.

**12.** Turbomaschine, umfassend eine Anordnung nach einem der Ansprüche 1 bis 11.

**Claims**

**1.** An assembly for a gas turbine engine comprising:

- a nacelle (1) having a longitudinal axis (X-X) and comprising an intake lip (10) defining an air intake (100), and
- a device for modifying the geometry of the air intake (3), said device (3) comprising:

- a first slat (30), and
- a second slat (32),

the first slat (30) and the second slat (32) being mobile in translation according to the longitudinal axis (X-X) relative to the nacelle (1) between:

- a first configuration where the first slat (30) forms the intake lip (10) and the second slat (32) extends inside the nacelle (1), and
- a second configuration where the first slat (30) extends at a distance from the intake lip (10), and the second slat (32) forms the intake lip (10) so as to define an airflow channel (34) between a downstream surface of the first slat (30) and an upstream surface of the second slat (32),

The assembly being **characterized in that** the first slat (30) has:

- in a first radial plane (P1) relative to the longitudinal axis (X-X), a first downstream profile of the first slat (C21), and
- in a second radial plane (P2) relative to the longitudinal axis (X-X), a second downstream profile of the first slat (C22),

the second downstream profile of the first slat (C22) being different to the first downstream profile of the first slat (C21), such that the airflow channel (34) has, in the first radial plane (P1), a first longitudinal section, and in the second radial plane (P2), a second longitudinal section, the second longitudinal section being different to the first longitudinal section.

2. The assembly for a gas turbine engine according to claim 1, wherein the second slat (32) has, in a radial plane (P) relative to the longitudinal axis (X-X), an upstream profile of the second slat (C3), the upstream profile of the second slat (C3) having, in the second configuration, a tangential continuity with a profile of the nacelle (1) defined in the radial plane (P).

3. The assembly for a gas turbine engine according to any one of claims 1 and 2, wherein the first slat (30) has, in a radial plane (P) relative to the longitudinal axis (X-X), an upstream profile of the first slat (C1), and the second slat (32) has, in the radial plane (P), an upstream profile of the second slat (C3), the upstream profile of the second slat (C3) being identical to the upstream profile of the first slat (C1).

4. The assembly for a gas turbine engine according to any one of claims 1 to 3, wherein the second slat (32) has:

- in a first radial plane (P1) relative to the longitudinal axis (X-X), a first upstream profile of the second slat (C31), and
- in a second radial plane (P2) relative to the longitudinal axis (X-X), a second upstream profile of the second slat (C32),
- the second upstream profile of the second slat (C32) being different to the first upstream profile of the second slat (C31), such that the airflow channel (34) has, in the first radial plane (P1), a first longitudinal section, and in the second radial plane (P2), a second longitudinal section, the second longitudinal section being different to the first longitudinal section.

5. The assembly for a gas turbine engine according to any one of claims 1 to 4, wherein, over at least one angular portion of the device for modifying the geometry of the air intake (3), the first slat (30) and the second slat (32) are connected so as to form a single slat (33), also mobile in translation according to the longitudinal axis (X-X) relative to the nacelle (1).

6. The assembly for a gas turbine engine according to any one of claims 1 to 5, wherein the first slat (30) and the second slat (32) extend over a first angular portion of the nacelle (1), a second angular portion of the nacelle (2) being bordered by a fixed part of the air intake lip (10).

7. The assembly for a gas turbine engine according to any one of claims 1 to 6, wherein the device for modifying the geometry of the air intake (3) comprises a guide rod (36) extending parallel to the longitudinal axis (X-X), and connecting the first slat (30) to the second slat (32) such that, over at least one angular portion of the device for modifying the geometry of the air intake (3), the first slat (30) is mounted fixed relative to the second slat (32).

8. The assembly for a gas turbine engine according to any one of claims 1 to 7, wherein the device for modifying the geometry of the air intake (3) comprises a guide rod (36) extending parallel to the longitudinal axis (X-X), the guide rod (36) being telescopic so that over at least one angular portion of the device for modifying the geometry of the air intake (3), the movement of the first slat (30) is independent of the movement of the second slat (32).

9. The assembly for a gas turbine engine according to any one of claims 7 and 8, comprising an anti-icing system of the first slat (30) and/or of the second slat (32), comprising an anti-icing fluid circulation channel extending at least in part inside the guide rod (36).

10. The assembly for a gas turbine engine according to any one of claims 1 to 9, wherein the device for modifying the geometry of the air intake (3) also comprises an actuator (36) lodged in the nacelle (1) and configured to set in motion the first slat (30) and the second slat (32) between the first configuration and the second configuration.

11. The assembly for a gas turbine engine according to any one of claims 1 to 10, wherein the nacelle (1) has a non-axisymmetric shape.

12. A gas turbine engine according to any one of claims 1 to 11.

FIG. 1

FIG. 2

FIG. 3

FIG. 4

FIG. 5

FIG. 6

FIG. 7

FIG. 8

FIG. 9

FIG. 10

EP 4 045 397 B1

FIG. 11

FIG. 12

FIG. 13

FIG. 14

FIG. 15

FIG. 16

FIG. 17

## RÉFÉRENCES CITÉES DANS LA DESCRIPTION

**Documents brevets cités dans la description**

- GB 1410160 A
- US 2018371996 A1